# EUROPÄISCHE PATENTSCHRIFT

(11) **EP 0 574 848 B1**
(45) Veröffentlichungstag und Bekanntmachung des Hinweises auf die Patenterteilung: **30.10.1996**
(21) Anmeldenummer: 93109429.6
(22) Anmeldetag: 12.06.1993
(51) Int. Cl.: B60N 2/28

(54) **Kleinstkindersitz für Kraftfahrzeuge**
Infant seat for motor vehicles
Siège de petits enfants pour véhicules automobiles

(30) Priorität: 16.06.1992 DE 9208053 U; 01.07.1992 DE 9208778 U
(43) Veröffentlichungstag der Anmeldung: 22.12.1993
(73) Patentinhaber: Schräder, Margarete, D-95352 Marktleugast (DE)
(72) Erfinder: Schräder, Margarete, D-95352 Marktleugast (DE)
(74) Vertreter: Tergau, Enno, Dipl.-Ing.

(56) Entgegenhaltungen:
- EP-A- 0 197 910
- EP-A- 0 251 305
- EP-A- 0 479 151
- DE-A- 3 506 122
- GB-A- 2 165 745

## Beschreibung

Die Erfindung betrifft einen Kleinstkindersitz mit den Merkmalen des Oberbegriffs des Anspruches 1 (siehe zum Beispiel DE-A-3 506 122). Es handelt sich dabei um einen sogenannten "Gruppe-Null-Sitz" für im Säuglingsalter befindliche Kinder, die mehr liegend als sitzend befördert werden. Die Sitzschale hat dadurch mehr die Form einer Sitzwanne. Sie ist in aller Regel in unterschiedlichen Schwenkstellungen am Chassis fixierbar.

Das Kind wird in solchen Sitzen in aller Regel mit in Fahrtrichtung des Fahrzeuges weisendem Kopf befördert. Die Ausgestaltung eines Kindersitzes zu einer solchen Beförderungsart wird als "Re-Board-System" bezeichnet.

Bei der Anordnung des Kindersitzes auf den Rücksitzen eines PKW's kann ein Dreipunktgurt vorhanden sein, der meistenteils als Automatikgurt ausgebildet ist und einen Beckengurtteil sowie einen Schultergurtteil aufweist, die in der nachstehenden Beschreibung aber kurz als Beckengurt bzw. als Schultergurt bezeichnet sind.

Das fahrzeugeigene Gurtsystem wird an Gurtführungsmitteln des Kindersitzes fixiert. Dadurch wird eine Lagesicherung des Kindersitzes gegenüber dem Fahrzeug selbst während der Beschleunigungen des Fahrzeugs erreicht. Ein derartiger Kindersitz ist aus EP-A-0 251 305 und aus DE-A-3 506 122 bekannt. Der Kindersitz besteht dort aus einem Chassis und einer daran schwenkbar gelagerten Sitzwanne. Bei dem Kindersitz gemäß DE-A-3 506 122 sind sowohl am Chassis als auch an der Sitzwanne Gurtführungsmittel zur Fixierung eines fahrzeugeigenen Dreipunkt-Automatik-Sicherheitsgurtes befestigt. Dabei ist der Schultergurt um die Sitzwanne herumgeschlungen und dort an einem Gurtführungsmittel fixiert. Die Aufroll-automatik des Gurtsystems bedingt jedoch in vielen Fällen eine unerwünschte Beweglichkeit des Kindersitzes gegenüber dem Fahrzeugsitz. Aufgrund der Beweglichkeit des Sicherheitsgurtes können auch unerwünschte Lageänderungen zwischen der Sitzwanne und dem Chassis auftreten. Zudem reicht die Länge des fahrzeugeigenen Gurtsystems oft nicht aus, um den Schultergurt um die Sitzwanne herumzuschlingen, so daß eine stabile Fixierung des gesamten Kindersitzes allein mit dem fahrzeugeigenen Gurtsystem gar nicht möglich ist. In den Fällen, in denen die Gurtlänge dennoch ausreicht, kann das Herumschlingen des Schultergurtes um die Sitzwanne und seine Fixierung am Gurtführungsmittel zu einem komplizierten und somit bedienungsunfreundlichen Vorgang werden.

Ausgehend von diesen Nachteilen liegt der Erfindung die Aufgabe zugrunde, einen Kindersitz derart auszubilden, daß er unter Zuhilfenahme des fahrzeugeigenen Gurtsystems unabhängig von besonderen baulichen Gegebenheiten unterschiedlicher Fahrzeughersteller und unterschiedlicher Fahrzeugtypen universell verwendbar ist. Dabei soll die Lagesicherung des Kindersitzes am Fahrzeugsitz weiter verbessert werden. Diese Aufgabe wird durch die Merkmalskombination des Anspruches 1 gelöst. Dadurch ist eine unmittelbare Sicherung beider wesentlichen Teile des Kindersitzes, nämlich des Chassis und der Sitzwanne durch Sicherheitsgurte gewährleistet. Die Verwendung eines Sondergurtes als Bestandteil eines kindersitzeigenen Gurtsystems ist besonders auch dann von Vorteil oder aus Sicherheitsgründen sogar unbedingt erforderlich, wenn seitens des fahrzeugeigenen Gurtsystems nur ein Beckengurt - z.B. an der Rücksitzbank eines PKW's - zur Fixierung des Chassis am Fahrzeugsitz vorhanden ist.

Reicht die Gurtlänge des Schultergurtes zur Umschlingung der Sitzwanne nicht aus, so wird die Umschlingung durch den Sondergurt vollzogen. Der Sondergurt kann jedoch in gleicher Weise auch dann verwendet werden, wenn die Schultergurtlänge zur Umschlingung der Sitzwanne ausreicht. In diesem Fall ist die Sitzwanne von Sondergurt und Schultergurt gleichermaßen umschlungen. Unerwünschte Lageänderungen der Sitzwanne werden dadurch noch wirksamer unterdrückt.

Zur sicheren Fixierung des Sondergurtes ist eine Ausgestaltung des Kindersitzes nach den Ansprüchen 2 - 8 vorgesehen. Die Fixierung des Sondergurtes am Chassis erfolgt zweckmäßig oberhalb der Auflageseite, so daß im Gebrauchszustand der Sondergurt im wesentlichen in einer Horizontalebene verläuft, in der er seine Sicherheitsfunktion bei einem Crash-Fall besonders wirksam werden läßt. Bei einer Konstruktion des Kindersitzes nach den Ansprüchen 2 - 7 ist eine besonders stabile Bauweise gewährleistet.

Durch Anspruch 8 ist eine genaue Positionierbarkeit des Sondergurtes bzw. des fahrzeugeigenen Sicherheitsgurtes möglich.

Anspruch 9 berücksichtigt eine gurtlängensparende Bauweise des Kindersitzes. Dadurch ist zumindest die Fixierung des Beckengurtteiles eines fahrzeugeigenen Dreipunkt-Gurtes am Chassis gewährleistet.

Durch Anspruch 11 findet der Kindersitz im Crash-Fall eine sichere Abstützung auch an der Rückenlehne des Fahrzeugsitzes. Hierzu soll in diesem Bereich das Chassis ausreichend weit nach oben gezogen sein, damit keine für die Beibehaltung der Sitzposition schädlichen Drehmomente im Crashfall wirksam werden, die den Kindersitz von seiner Auflage auf der Sitzfläche des Fahrzeugsitzes abheben.

In den Fällen, in denen die Länge des fahrzeugeigenen Gurtes bzw. Gurtsystems nicht für eine Umschlingung der Sitzwanne ausreicht, soll aber auch weiterhin der Schultergurt zur Lagefixierung des Kindersitzes herangezogen werden. Dazu dient Anspruch 11. Danach ist das Chassis im Rücklehnenbereich des Fahrzeugsitzes so weit nach oben gezogen, daß ihm gegenüber auch ein Schultergurt eines fahrzeugeigenen Gurtsystems wirksam werden kann.

Besonders zweckmäßig ist dabei nach Anspruch 12 die Sicherung des Chassis durch den Schultergurt des fahrzeugeigenen Gurtsystems durch dessen geführte und gegebenenfalls zusätzlich geklemmte Anlage am oberen, rücklehnenseitigen Ende des Chassis, insbesondere an dessen Querstrebe 14.

Durch Anspruch 13 ist weiterhin sichergestellt, daß auch der Beckengurt des Gurtsystems eine befriedigende Haltekraft auf das Chassis ausübt. Das wäre nicht ohne weiteres dann sichergestellt, wenn der Auflagebereich des Beckengurtes im Benutzungsfall sehr nahe am Zwickel zwischen der Sitzfläche und der Rückenlehne des Fahrzeugsitzes angreift.

Durch Anspruch 14 ist eine sehr sicherheitswirksame Halterung der Sitzwanne durch einen Sicherheitsgurt gewährleistet. Die Umfassungsrichtung verläuft im wesentlichen horizontal, d.h. in einer etwa in Fahrtrichtung weisenden Ebene. In dieser Fahrtrichtung flankiert der Umfassungsgurt die Sitzwanne beidseitig. Dabei ist besonders an der in Fahrtrichtung liegenden Kopfseite der Sitzwanne eine flächige Anlage des Gurtes von Vorteil, damit im Crash-Fall die auf die dortige Wannenseitenwand einwirkenden spezifischen Verformungskräfte niedrig gehalten werden.

In der Regel wohnt den bei Sicherheitsgurtsystemen verwendeten Gurten eine im Crash-Fall wirksamwerdende Längendehnbarkeit inne. Durch die erfindungsgemäße Konstruktion steht gerade in der besonders relevanten Fahrtrichtung zur Sicherung der Sitzwanne eine große Gurtlänge und damit ein großer zur Vernichtung von Verformungsenergie wirksamer Gurtabschnitt zur Verfügung. Hierbei ist auch zu berücksichtigen, daß bei solchen Kindersitzen verwendete Sitzwannen in aller Regel aus einem Kunststoff einstückig geformt sind. Hier ist es von besonderer Wichtigkeit, daß im Crash-Fall möglichst wenig Verformungsenergie unmittelbar auf die Sitzwanne einwirkt.

Erfahrungsgemäß sind Frontalzusammenstöße im Kraftfahrzeugverkehr weniger selten als Kollisionen von schräg vorne oder von der Seite. In solchen Fällen ist die feste Positionierung des Kindersitzes auf einem Fahrzeugsitz nicht ohne weiteres allein durch die vorstehend beschriebenen Sicherungseinrichtungen gewährleistet. Wegen der großen Längserstreckung der Sitzwanne in Fahrzeuglängsrichtung werden besonders hohe Lageänderungskräfte im Kopfbereich, also an dem der Fahrzeugsitz-Rückenlehne abgewandten Ende der Sitzwanne bzw. des Kindersitzes wirksam.

Um hier eine weitere Sicherungsmaßnahme zu treffen, kann am Kindersitz eine Lagesicherungsstrebe vorgesehen sein, welche im Bereich des dem Rückenlehnenende abgewandten Kopfendes des Chassis wirksam über die Sitzfläche des Fahrzeugsitzes nach unten in Richtung auf den Fahrzeugboden weist. Eine derartige Lagesicherungsstrebe ist aus EP-A-0 485 121 bekannt. Die gabelförmige Lagesicherungsstrebe stützt sich mit ihren Gabelzinken am Fahrzeugboden lose und deshalb beweglich ab und umfaßt mit den beiden Gabelzinken etwa formschlüssig den zwischen beiden Vordersitzen des Fahrzeuges zur Rückbank hin verlaufenden fahrzeugeigenen Kabelkanal. Nachteilig an dieser Lagesicherungsstrebe ist es, daß der Kindersitz im Mittelbereich der Rückbank positioniert werden muß. Da eine große Anzahl von Fahrzeugtypen aber nur zwei Rücksitze auf der Rückbank aufweist, ist der Kindersitz durch den dem Rücksitz zugeordneten Fahrzeugsicherheitsgurt entweder überhaupt nicht oder allenfalls ungenügend fixierbar. Die mit dem Kabelkanal zusammenwirkende Lagesicherungsstrebe verschlechtert also die Lagesicherung des Kindersitzes am Fahrzeugsitz. Die lose Abstützung der Lagesicherungsstrebe am Fahrzeugboden bewirkt insbesondere bei Erschütterungen des Kraftfahrzeuges erhebliche Lageänderungen des Chassis und somit des gesamten Kindersitzes. Für die Lagesicherung und Fixierung des Chassis ist ein zusätzlicher Fixiergurt vorgesehen, der umständlich zwischen Chassis und Sitzwanne lose hindurchgeführt und am Fahrzeugboden verankert wird. Auch in Montagestellung des Fixiergurtes bleibt das vom Fixiergurt umschlungene Chassis gegenüber dem Fahrzeugboden beweglich.

Damit die Lagesicherung des Kindersitzes am Fahrzeugsitz weiter verbessert wird, ist eine Ausgestaltung des Kindersitzes nach Anspruch 17 vorgesehen. Anspruch 17 sieht eine gesonderte Fixierung der Lagesicherungsstrebe am Fahrzeugboden vor. Dies bedeutet zweifelsohne eine Sicherheitserhöhung. Es versteht sich von selbst, daß die Vorteile einer solchen Lagesicherungsstrebe nicht notwendig und unbedingt von der Ausgestaltung des Sicherheitsgurtsystems nach den Merkmalen des Anspruches 1 ff. abhängen.

Gegenstand der Ansprüche 18 bis 24 sind bevorzugte Ausführungsformen der Lagesicherungsstrebe, die zu Lagesicherungszwecken in unterschiedlicher Weise am Kraftfahrzeug fixierbar ist. Durch die Ausgestaltung nach Anspruch 18 jedenfalls ist eine Wirksamkeit dieser Lagesicherungsstrebe über einen großen Breitenbereich gewährleistet. Sie kann durch formschlüssige Anlage beispielsweise an der Sitzvorderkante ohne weitere Fixiermaßnahmen wirksam werden und damit der Positioniersicherheit des Kindersitzes auf dem Fahrzeugsitz dienlich sein. Dazu ist eine Längenverstellbarkeit gegenüber dem Chassis zweckmäßig, um eine Anpassung an unterschiedliche Fahrzeuggegebenheiten zu ermöglichen.

Es wurde bereits vorgeschlagen, die Sitzwanne lösbar am Chassis zu befestigen, um sie als Kindertrage auch außerhalb des Kraftfahrzeuges verwenden zu können. Dazu weist beispielsweise die Sitzwanne einen Tragebügel auf, dessen Querhaupt sich in einem rechten Winkel zur Längsrichtung erstreckt. Dadurch kann die Sitzwanne wie ein Tragekorb getragen werden. Hier ist es nun zweckmäßig, wenn der Tragebügel um eine horizontale Querachse schwenkbar an der Sitzwanne angelenkt ist. Dann braucht der Tragebügel nur nach Anspruch 23 und nach Art einer solchen Lagesicherungsstrebe verwendet zu werden.

Eine weitere Form der Festlegung der Lagesicherungsstrebe in ihrer Gebrauchsstellung am Kraftfahrzeug selbst ist Gegenstand des Anspruches 25.

Der Gegenstand der Erfindung wird anhand von in den Figuren dargestellten Ausführungsbeispielen näher erläutert. Es zeigen:
- Fig. 1: einen auf einem Fahrzeugsitz mittels lediglich eines fahrzeugeigenen Dreipunkt-Automatikgurtes befestigten Kindersitz nach der Erfindung,
- Fig. 2: eine modifizierte Ausführungsform, bei der mittels eines Dreipunkt-Automatikgurtes nur das Chassis des Kindersitzes am Fahrzeug fixiert ist, während zur Fixierung der Sitzwanne am Chassis ein Sondergurt vorhanden ist,
- Fig. 3 und 4: Ausführungsformen analog Fig. 2, allerdings mit abgewandelten Führungen des Schultergurtes am Chassis,
- Fig. 5: eine Ausführungsform analog Fig. 2, 3 und 4, bei der die Fixierung des Chassis am Fahrzeug jedoch nur durch einen Beckengurt erfolgt,
- Fig. 6: eine erfindungsgemäß ausgestaltete Sitzwanne in Rückansicht,
- Fig. 7: eine Rückansicht des Kopfendes der Sitzwanne von außen mit dargestellten Verlauf der Gurtführung,
- Fig. 8: eine Darstellung analog den Fig. 1-5 entsprechend der universellen Verwendbarkeit jedoch ohne das Sicherheitsgurtsystem mit unterschiedlichen Ausführungsformen einer am Kopfende des Chassis anbringbaren Lagesicherungsstrebe,
- Fig. 9: eine Ausführungsform mit einem Tragebügel für die Sitzwanne als Lagesicherungsstrebe.

Der Kindersitz besteht im wesentlichen aus dem Chassis 1 zur Auflage und Abstützung am Fahrzeugsitz 2 und aus einer vom Chassis 1 getragenen, insbesondere daran abnehmbar und/oder schwenkbar befestigten Sitzwanne 3 zur umfänglich abgegrenzten Kindeinlage. Das Chassis 1 ist sowohl an der Sitzfläche 4 als auch an der Rückenlehne 5 des Fahrzeugsitzes 2 abgestützt. Das Chassis 1 liegt dort im wesentlichen flächig auf. Das Chassis 1 und die Sitzwanne 3 sind mit Mitteln zur Führung eines an ihren dem Fahrzeugsitz 2 abgewandten Seiten anliegenden Sicherheitsgurtsystems versehen. Dazu dient einerseits das fahrzeugeigene Gurtsystem in Form des Beckengurts 6 und ggf. des Schultergurts 7. Damit ist aber keine Aussage darüber getroffen, daß es sich bei diesen beiden Gurtarten um unterschiedliche Gurte handeln muß. Vielmehr können der Beckengurt 6 und der Schultergurt 7 auch Bestandteil eines einheitlichen Gurtsystems, z.B. eines Dreipunktgurtes auch in Form eines Automatikgurtes sein.

Das Rückenlehnenende 8 des Chassis 1 reicht von der Sitzfläche 4 bis etwa zur Höhe des Sitzwannenrandes 9 bzw. bis mindestens zur Höhe der Befestigungslager 10 gegenüber dem Chassis 1. Die Längsseiten des Chassis 1 sind durch nach Art von in Sitzlängsrichtung 11 verlaufenden Kufen wirksame Längsstreben 12 gebildet. Die Längsstreben 12 sind vorzugsweise Rohrstreben aus einem metallischen Werkstoff, insbesondere aus Stahl. Sie sind durch Querstreben 13,14 miteinander verbunden. Die am Rückenlehnenende 8 vorgesehene Querstrebe 14 ist einstückig mit den Längsstreben 12. Dadurch besteht der Auflage- und Anlagebereich des Chassis 1 in Form der beiden Längsstreben 12 mit der sie verbindenden Querstrebe 14 aus nur einem gebogenen Rohrabschnitt.

Die Längsstreben 12 des Chassis 1 weisen zwischen ihren im wesentlichen geradlinigen bzw. ebenen Anlagebereichen an der Sitzfläche 4 und der Rückenlehne 5 des Fahrzeugsitzes 2 einen Übergangsbereich 15 auf, der jeweils einen stumpfen Winkel mit den beiderseits angrenzenden Strebenbereichen bildet. In diesem Übergangsbereich 15 befinden sich die Gurtführungen 16 für mindestens den Beckengurt 6 des fahrzeugeigenen Sicherheitsgurtsystems.

Die Sitzwanne 3 weist mindestens an ihrer der Rückenlehne 5 des Fahrzeugsitzes 2 abgewandten Seitenwand 17 zur über deren Erstreckung wirksamen, flächigen Gurtanlage Gurtführungsmittel 18 auf. Außerdem ist eine Klemmvorrichtung 19 vorgesehen, mittels derer eine Gurtklemmung an der Sitzwanne 3 vorgesehen werden kann, die auch eine relative Verschiebung des Gurtes gegenüber der Sitzwanne 3 unmöglich macht. Die Klemmvorrichtung 19 befindet sich am Kopfende 20 der Sitzwanne 3 in der Nähe des Wannenrandes 9.

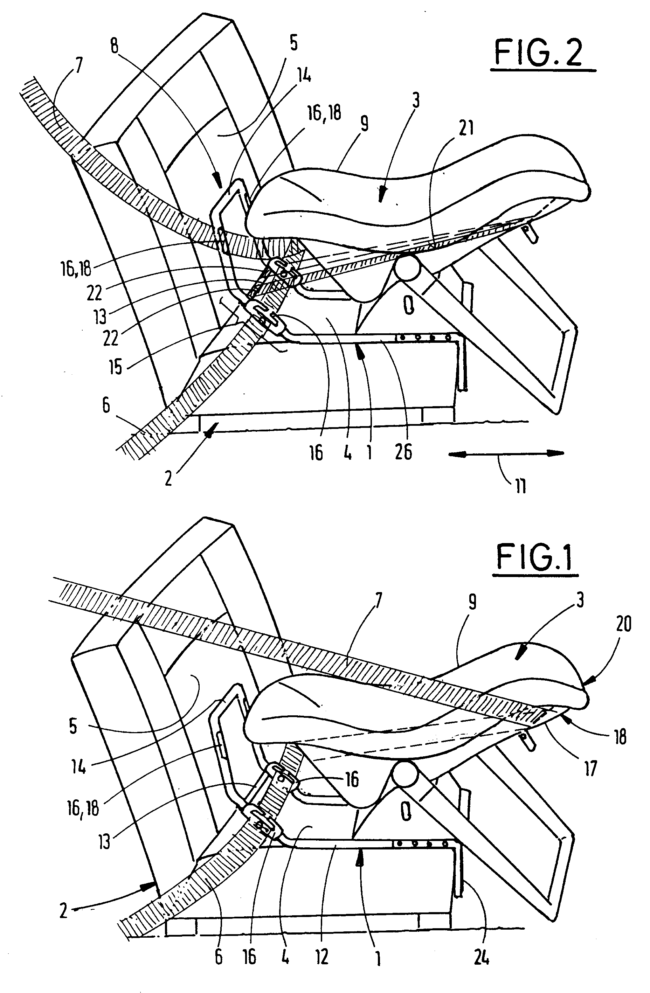

Bei der Ausführungsform gemäß Fig. 1 umschlingt der Schultergurt 7 eines Automatikgurts die Sitzwanne 3. In diesem Fall ist es der Schultergurt 7, welcher durch die Klemmvorrichtung 19 unterhalb des Kopfendes 20 des Sitzwannenrandes 9 an der Sitzwanne 3 fixiert ist. Der Beckengurt 6 dieses Automatikgurtes ist dabei in den Gurtführungen 16 geführt. Der aus dem Beckengurt 6 und dem Schultergurt 7 bestehende Automatikgurt ist in bekannter Weise am Fahrzeugsitz 2 eingeklinkt fixiert, was hier nicht näher dargestellt ist.

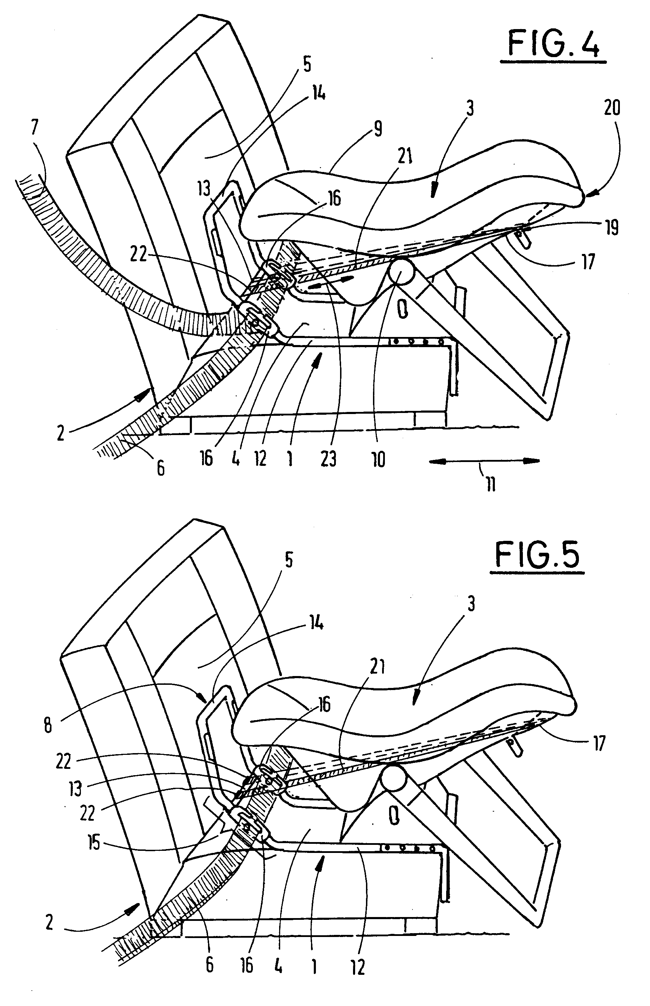

In Fig. 2 - 5 sind Fahrzeugverhältnisse dargestellt, in denen die Länge eines Dreipunkt-Automatikgurtes mit seinem Beckengurt 6 und seinem Schultergurt 7 nicht ausreicht, um die Fixierung der Sitzwanne 3 in der aus Fig. 1 ersichtlichen Weise vorzunehmen. In diesem Falle ist ein fahrzeugfremder Sondergurt 21 verwendet. Er ist um die Sitzschale 3 in gleicher Weise herumgelegt wie der Schultergurt 7 nach Fig. 1. Allerdings sind seine rückenlehnenseitigen Gurtenden 22 an der Querstrebe 13 des Chassis fixiert. Der Sondergurt 21 ist längenverstellbar. Die Längenverstellrichtung 23 ist in Fig. 4 verdeutlicht. Die Querstrebe 13, an der die Gurtenden 22 fixiert sind, geht etwa am oberen Ende des Übergangsbereiches 15 in die Längsstreben 12 des Chassis 1 über.

Die Fixierung des Kindersitzes auf dem Fahrzeugsitz 2 läßt sich in einfacher Weise bewerkstelligen. Wenn dazu nur der fahrzeugeigene Dreipunkt-Automatikgurt herangezogen werden muß, wird dabei wie folgt verfahren: Das Chassis 1 mit der darauf fixierten Sitzwanne 3 wird auf den Fahrzeugsitz 2 so aufgesetzt, daß es mit seinen Längsstreben 12 an der Sitzfläche 4 und an der Rückenlehne 5 satt anliegt. Sodann wird der Beckengurt durch die Gurtführungen 16 hindurchgeführt, die sich im Übergangsbereich 15 auf der der Rückenlehne 5 abgewandten Seite der Längsstreben 12 befinden. Sodann wird das auf der in Fig. 1 nicht einsehbaren Sitzseite befindliche Gurtschloß eingeklinkt und der Schultergurt 7 wird um die Sitzwanne 3 herumgelegt. Dabei wird darauf geachtet, daß der Schultergurt 7 an den Gurtführungsmitteln 18 am Kopfende 20 der Sitzwanne 3 entlanggeführt ist, damit eine satte, flächige Anlage des Schultergurtes 7 an der Kopfseitenwand 17 der Sitzwanne 3 gewährleistet ist. Aufgrund der vorhandenen Aufrollautomatik wird der losgelassene Schultergurt 7 selbsttätig strammgezogen. Anschließend wird er in seiner nunmehr sichergestellten Sollage durch Betätigung der Klemmvorrichtung 19 an der Sitzwanne 3 fixiert. Damit ist die Befestigung des Kindersitzes abgeschlossen.

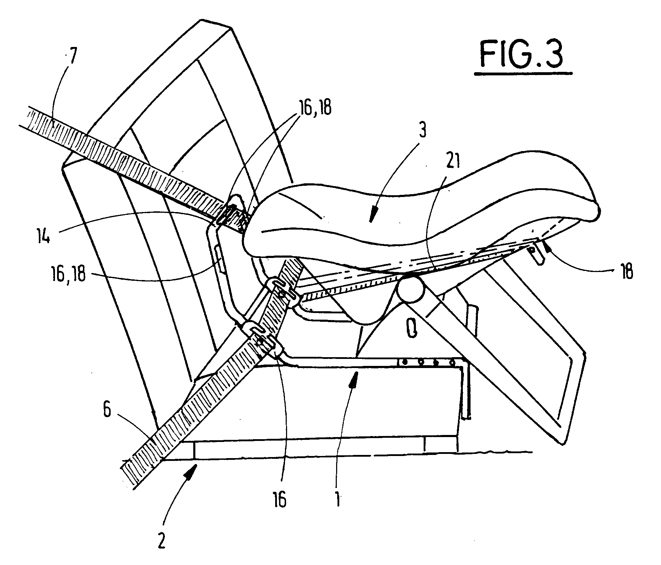

In den in Fig. 2-5 dargestellten Fällen reicht die Länge des fahrzeugeigenen Gurtes für die geschilderte Verfahrensweise nicht aus. In diesen Fällen wird durch den fahrzeugeigenen Gurt - gleichgültig ob nur durch den Beckengurt 6 (Fig. 5) oder durch den Beckengurt und den Schultergurt 7 - nur das Chassis 1 am Fahrzeugsitz 2 befestigt. Dazu wird der Beckengurt 6 in der anhand von Fig. 1 geschilderten Weise durch die Gurtführungen 16 auf der sitzabseitigen Seite der Längsstreben 12 lagegesichert und festgezogen, gegebenenfalls zusätzlich geklemmt. Sodann wird das auch in diesen Figuren nicht sichtbar an der Seite des Fahrzeugsitzes 2 befindliche Gurtschloß geschlossen und der Schultergurt 7 ist vorher bereits mit dem Beckengurt 6 gemeinsam ebenfalls in die Gurtführungen 16 eingelegt oder er liegt ebenfalls in Gurtführungen 16 geführt und gegebenenfalls zusätzlich geklemmt am Rücksitzende des Chassis 1 an und zwar entweder an den hier an der Rücklehne 5 anliegenden Längsstreben 12 (Fig. 2) oder an der ihre Enden miteinander verbindenden Querstrebe 14 (Fig. 3). Auch durch diese Anlage erfolgt eine weitere Lagesicherung des Chassis. Die Lagesicherung der Sitzwanne 3 erfolgt am Chassis 1 mittels des Sondergurtes 21. Dieser wird analog der anhand von Fig. 1 im Zusammenhang dort mit dem Schultergurt 7 geschilderten Art um die Sitzwanne herumgelegt. Seine beiden sitzseitigen Enden 22 sind beispielsweise als Schlaufen um die Querstrebe 13 des Chassis herumgelegt, also fixiert. Sodann wird der Sondergurt 21 strammgezogen und in strammgezogener Stellung fixiert. Dazu dient eine an sich bekannte Längenverstelleinrichtung 23, deren konstruktiver Aufbau hier nicht näher geschildert ist und auch keine prinzipielle Rolle spielt. Nach dieser Einstellung des Sondergurtes 21 in seiner Sollposition gegenüber der Sitzwanne 3 wird noch die Klemmvorrichtung 19 im Bereich des Kopfendes 20 der Sitzwanne 3 geschlossen.

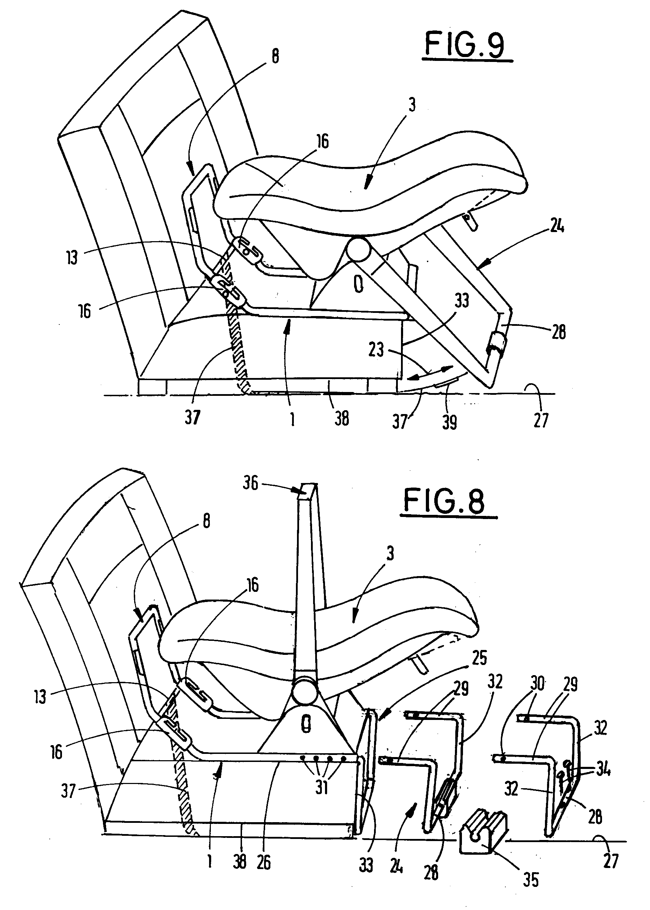

In insbesondere den Fig. 8,9 ist eine weitere Lagesicherungseinrichtung des Kindersitzes dargestellt, die nicht notwendigerweise das Vorhandensein der vorstehend erläuterten Ausführungsform des Gurtsystems erfordert. Diese weitere Lagesicherung wird durch eine Lagesicherungsstrebe 24 bewerkstelligt, die im Bereich des Kopfendes 25 des Chassis 1 wirksam ist und über dessen Auflageseite 26 nach unten in Richtung auf den Fahrzeugboden 27 weist. Die Lagesicherungsstrebe ist ein sich im wesentlichen über die Sitzbreite erstreckender Bügel 28. Sie ist in Sitzlängsrichtung 11 am Chassis 1 verstellbar. Da die Längsstreben 12 Rohrstreben sind, läßt sich diese längsverschiebbare Lagerung der Lagesicherungsstrebe 24 am Chassis 1 besonders einfach bewerkstelligen. Dazu sind einfach die in die Horizontale abgebogenen Schenkelenden 29 des Bügels 28 in die offenen Rohrstrebenenden 12 eingeschoben.

Durch Querbohrungen 30,31 in den Schenkelenden 29 bzw. in den Längsstreben 12 läßt sich die Relativlage der Lagesicherungsstreben 24 am Chassis 12 in unterschiedlichen Verschiebestellungen fixieren. Die zusätzliche Lagesicherung des Chassis 1 kann durch die Lagesicherungsstrebe 24 zunächst dadurch vorgenommen werden, daß diese so weit in die Längsstreben 12 eingeschoben wird, bis sie mit ihren Bügelschenkeln 32 an der Sitzvorderseite 33 anschlägt. Sodann kann die Lagefixierung durch das Durchstecken von Fixierungsstiften durch die Bohrungen 30,31 vorgenommen werden. Jedenfalls ist nun das Kopfende des Chassis 1 bereits am Fahrzeugsitz 2 durch bloße Anlage lagegesichert.

Eine andere Möglichkeit besteht in der Fixierung des Bügels 28 z.B. durch Schrauben 34 am Fahrzeugboden 27.

Eine andere Variante besteht darin, daß am Fahrzeugboden 27 eine Formschlußaufnahme 35 befestigt wird, in die der Bügel 28 einklipsbar ist.

Im Falle von Fig. 9 ist als Lagesicherungsstrebe 24 der nach unten geschwenkte Tragbügel 36 der Sitzwanne 3 verwendet. Der Tragbügel 36 ist im Befestigungslager 10 schwenkbar gegenüber dem Chassis 1 gelagert. Die Schwenkachse verläuft quer zur Sitzlängsrichtung 11.

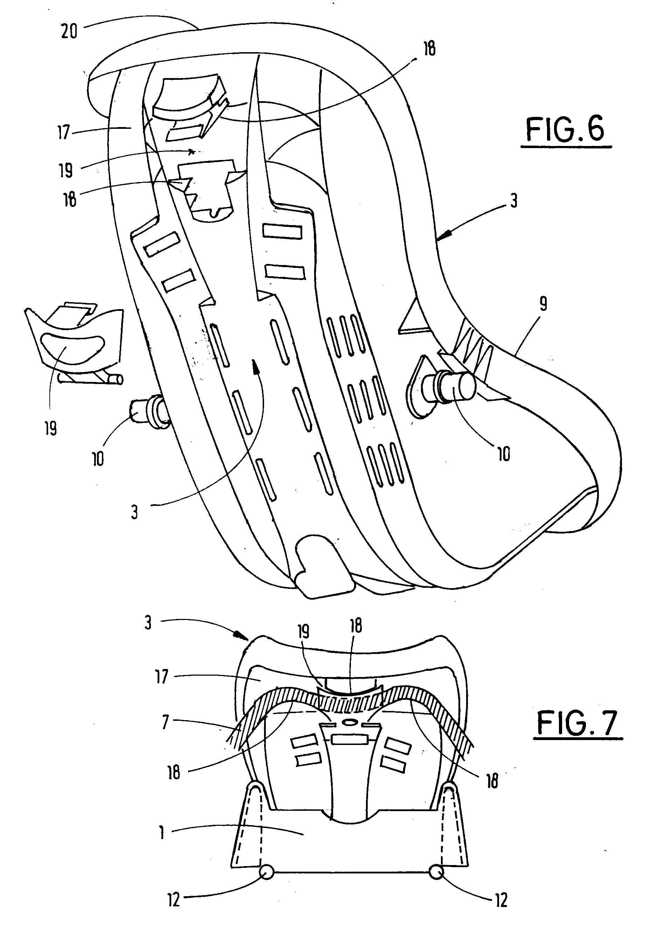

Das in Auflage auf den Fahrzeugboden geschwenkte Querhaupt des Tragbügels 36 ist durch den Fixiergurt 37 mit der Querstrebe 13 des Chassis 1 verbunden, wobei der Fixiergurt 37 um die Unterseite 38 des Fahrzeugsitzes 2 herumgeführt ist. Der Fixiergurt 37 ist längenverstellbar. Dazu dient eine im einzelnen nicht näher dargestellte Längenverstellvorrichtung 39. Dadurch wird der Fixiergurt 37 zwischen Bügel 28 und Querstrebe 13 verspannt, wodurch zusätzlich zu einer herkömmlichen Lagesicherung des Kindersitzes durch beispielsweise das in den Fig. 1-7 dargestellte Gurtsystem eine weitere Lagesicherung bewerkstelligt wird.

### Bezugszeichenliste

- 1: Chassis
- 2: Fahrzeugsitz
- 3: Sitzwanne
- 4: Sitzfläche
- 5: Rückenlehne
- 6: Beckengurt
- 7: Schultergurt
- 8: Rückenlehnenende
- 9: Sitzwannenwand
- 10: Befestigungslager
- 11: Sitzlängsrichtung
- 12: Längsstrebe
- 13: Querstrebe
- 14: "
- 15: Übergangsbereich
- 16: Gurtführung
- 17: Seitenwand
- 18: Gurtführungsmittel
- 19: Klemmvorrichtung
- 20: Kopfende
- 21: Sondergurt
- 22: Gurtende
- 23: Längenverstellrichtung
- 24: Lagesicherungsgestell
- 25: Kopfende
- 26: Auflageseite
- 27: Fahrzeugboden
- 28: Bügel
- 29: Schenkelende
- 30: Bohrung
- 31: "
- 32: Bügelschenkel
- 33: Sitzvorderseite
- 34: Schraube
- 35: Formschlußausnehmung
- 36: Tragbügel
- 37: Fixiergurt
- 38: Unterseite
- 39: Längenverstellvorrichtung

## Patentansprüche

1. Kleinstkindersitz für Kraftfahrzeuge mit
- einem Chassis (1) zur Auflage und Abstützung am Fahrzeugsitz (2),
- einer vom Chassis (1) getragenen, insbesondere daran abnehmbar und/oder schwenkbar befestigten Sitzwanne (3) für das Kind und
- am Chassis (1) wie auch an der Sitzwanne (3) angeordneten Gurtführungsmitteln (16,18) für einen Fahrzeugsicherheitsgurt,
gekennzeichnet durch
einen fahrzeugfremden, um die Sitzwanne (3) herumgelegten und in deren Gurtführungsmitteln (18) geführten Sondergurt (21), der mit seinen Enden (22) am Chassis (1) fixiert ist.

2. Kindersitz nach Anspruch 1,
dadurch gekennzeichnet,
- daß das Chassis (1) aus kufenartigen in Sitzlängsrichtung (11) verlaufenden Längsstreben (12) und die Längsstreben (12) verbindenden Querstreben (13,14) gebildet ist und
- daß eine Auflageseite (26) des Chassis (1) in Sitz-Montageendstellung auf der Sitzfläche (4) des Fahrzeugsitzes (2) aufliegt und ein zur Auflageseite (26) im wesentlichen senkrechtes Rückenlehnenende (8) des Chassis (1) in Sitz-Montageendstellung an der Rückenlehne (5) des Fahrzeugsitzes (2) anliegt.

3. Kindersitz nach Anspruch 2,
dadurch gekennzeichnet,
daß der Sondergurt (21) beidendig am Rückenlehnenende (8) fixiert und längenverstellbar ist.

4. Kindersitz nach Anspruch 2 oder 3,
dadurch gekennzeichnet,
daß der Sondergurt (21) an einer Querstrebe (13) fixiert ist.

5. Kindersitz nach Anspruch 4,
dadurch gekennzeichnet
daß die Längsstreben (12) zwischen ihren geradlinigen Anlagebereichen an der Sitzfläche (4) und an der Rückenlehne (5) des Fahrzeugsitzes (2) einen zu diesen Anlagebereichen stumpfwinklig stehenden Übergangsbereich (15) aufweisen, an dessen oberem Ende die Querstrebe (13) angeformt ist.

6. Kindersitz nach Anspruch 2 oder 5,
dadurch gekennzeichnet,
daß die Längsstreben (12) Rohrstreben sind.

7. Kindersitz nach einem oder mehreren der vorhergehenden Ansprüche,
dadurch gekennzeichnet,
daß die Längsstreben (12) am Rückenlehnenende (8) durch eine mit ihnen einstückige, abgebogene Querstrebe (14) miteinander verbunden sind.

8. Kindersitz nach einem oder mehreren der vorhergehenden Ansprüche,
dadurch gekennzeichnet,
daß ein Gurtführungsmittel (18) mit einem Klemmittel (19) kombiniert ist.

9. Kindersitz nach Anspruch 8,
dadurch gekennzeichnet,
daß die Gurtführungsmittel (16) des Chassis (1) an den Längsstreben (12) im Übergangsbereich (15) angeordnet sind.

10. Kindersitz nach einem oder mehreren der vorhergehenden Ansprüche,
dadurch gekennzeichnet,
daß die Gurtführungsmittel (16,18) zur einliegenden oder umfassenden Auflage eines fahrzeugeigenen Becken- und/oder Dreipunktgurtsystems ausgebildet und angeordnet sind.

11. Kindersitz nach einem oder mehreren der vorhergehenden Ansprüche,
dadurch gekennzeichnet
daß das Rückenlehnenende (8) des Chassis (1) von dessen sitzflächenseitiger Auflage bis etwa zur Höhe des Randes (9) oder des Befestigungslagers (10) der Sitzwanne (3) derart reicht, daß auch der Schultergurt (7) eines fahrzeugeigenen Sicherheitsgurtsystems am Chassis (1) auflegbar ist.

12. Kindersitz nach Anspruch 11,
dadurch gekennzeichnet,
daß der Schultergurt (7) des fahrzeugeigenen Sicherheitsgurtsystems am oberen, rücklehnenseitigen Ende des Chassis (1), insbesondere an dessen Querstrebe (14) anlegbar und/oder in einer Gurtführung (16,18) geführt ist.

13. Kindersitz nach einem oder mehreren der vorhergehenden Ansprüche,
dadurch gekennzeichnet,
daß der Übergangsbereich (15) die Gurtführung (16) für mindestens den Beckengurt (6) des fahrzeugeigenen Sicherheitsgurtsystems trägt.

14. Kindersitz nach einem oder mehreren der vorhergehenden Ansprüche,
dadurch gekennzeichnet,
daß die Sitzwanne (3) mindestens an ihrer der Rückenlehne (5) des Fahrzeugsitzes (2) abgewandten Seitenwand (17) zur über deren Erstreckung wirksamen, insbesondere flächigen Gurtanlage Gurtführungsmittel (18) aufweist.

15. Kindersitz nach Anspruch 14,
dadurch gekennzeichnet,
daß die Gurtführungsmittel (18) nahe dem Rand (9) der Sitzwanne (3) angeordnet sind.

16. Kindersitz nach einem oder mehreren der vorhergehenden Ansprüche,
gekennzeichnet durch
eine Positionierung und Bemessung der Gurtführungsmittel (18) zur Aufnahme des Schultergurtes (7) eines fahrzeugeigenen Gurtsystems.

17. Kleinstkindersitz für Kraftfahrzeuge nach Anspruch 1 mit einer im Bereich des dem Rückenlehnenende (8) abgewandten Kopfendes (25) des Chassis (1) wirksamen und über die Sitzfläche (4) des Fahrzeugsitzes (2) nach unten in Richtung auf den Fahrzeugboden (27) weisenden Lagesicherungsstrebe (24),
dadurch gekennzeichnet,
daß die Lagesicherungsstrebe (24) mit ihrem chassisfernen Ende am Fahrzeugboden (27) lösbar fixiert ist.

18. Kindersitz nach Anspruch 17,
dadurch gekennzeichnet,
daß die Lagesicherungsstrebe (24) ein sich im wesentlichen über die Sitzbreite erstreckender Bügel (28) ist.

19. Kindersitz nach Anspruch 17 oder 18,
dadurch gekennzeichnet,
daß die Lagesicherungsstrebe (24) an das Kopfende (25) des Chassis (1) angesetzt ist.

20. Kindersitz nach einem der Ansprüche 17 bis 19,
dadurch gekennzeichnet,
daß die Lagesicherungsstrebe (24) in Sitzlängsrichtung (11) verstellbar am Chassis (1), insbesondere an dessen Längsstreben (12) fixiert ist.

21. Kindersitz nach einem oder mehreren der Ansprüche 17 bis 20,
dadurch gekennzeichnet,
daß die Lagesicherungsstrebe (24) in den Rohrstreben des Chassis (1) längsverschiebbar geführt und in unterschiedlichen Verschiebestellungen fixierbar ist.

22. Kindersitz nach einem oder mehreren der Ansprüche 17 bis 21,
dadurch gekennzeichnet,
daß das chassisferne Ende der Lagesicherungsstrebe (24) etwa rechtwinklig zur Auflageseite (26) des Chassis (1) in von der Sitzschale (3) weggewandter Richtung nach unten steht.

23. Kindersitz nach einem oder mehreren der Ansprüche 17 bis 22,
dadurch gekennzeichnet,
daß die Lagesicherungsstrebe (24) ein am Chassis (1) schwenkbar gelagerter Tragbügel (36) ist, dessen sich über etwa die Sitzbreite erstreckender Quersteg in abgesenkter, rückenlehnenferner Schwenkstellung das über die Auflageseite (26) des Chassis (1) nach unten stehende Ende der Lagesicherungsstrebe (24) bildet.

24. Kindersitz nach einem oder mehreren der Ansprüche 17 bis 23,
gekennzeichnet durch
einen sich zwischen dem freien Ende der Lagesicherungsstrebe (24) und dem Rückenlehnenende (8) des Chassis (1) erstreckenden, zur Verspannung zwischen diesen Teilen längenverstellbaren Fixiergurt (37) zum Herumführen um die Unterseite (38) des Fahrzeugsitzes (2).

## Claims

1. Infant's seat for motor vehicles, having
- a chassis (1) for bearing and supporting on the vehicle seat (2),
- a seat shell (3) which is intended for the child, is borne by the chassis (1) and is fastened, in particular, thereon such that it can be removed and/or pivoted, and
- belt-guidance means (16,18) which are intended for a vehicle safety belt and are arranged on the chassis (1) and on the seat shell (3),
characterized by a separate belt (21) which does not belong to the vehicle, is laid around the seat shell (3), is guided in the belt-guidance means (18) of said seat shell and is fixed on the chassis (1) by means of its ends (22).

2. Child's seat according to Claim 1, characterized
- in that the chassis (1) is formed from runner-like longitudinal struts (12) which run in the longitudinal direction (11) of the seat, and transverse struts (13,14) which connect the longitudinal struts (12), and
- in that in the final mounted position of the seat, a bearing side (26) of the chassis (1) bears on the seat surface (4) of the vehicle seat (2) and a backrest end (8), essentially perpendicular to the bearing side (26), of the chassis (1) rests against the backrest (5) of the vehicle seat (2).

3. Child's seat according to Claim 2, characterized in that the separate belt (21) is fixed at both ends on the backrest end (8) and can be adjusted in length.

4. Child's seat according to Claim 2 or 3, characterized in that the separate belt (21) is fixed on a transverse strut (13).

5. Child's seat according to Claim 4, characterized in that, between their straight regions which rest against the seat surface (4) and against the backrest (5) of the vehicle seat (2), the longitudinal struts (12) have a transition region (15) which is located at an obtuse angle with respect to said straight regions and has the transverse strut (13) integrally formed on at its upper end.

6. Child's seat according to Claim 2 or 5, characterized in that the longitudinal struts (12) are tubular struts.

7. Child's seat according to one or more of the preceding claims, characterized in that the longitudinal struts (12) are connected to one another at the backrest end (8) by a bent transverse strut (14) which is formed in one piece with them.

8. Child's seat according to one or more of the preceding claims, characterized in that one belt-guidance means (18) is combined with a clamping means (19).

9. Child's seat according to Claim 8, characterized in that the belt-guidance means (16) of the chassis (1) are arranged on the longitudinal struts (12), in the transition region (15).

10. Child's seat according to one or more of the preceding claims, characterized in that the belt-guidance means (16,18) are designed and arranged for the insertion or enclosure of a lap belt and/or lap-shoulder belt system belonging to the vehicle.

11. Child's seat according to one or more of the preceding claims, characterized in that the backrest end (8) of the chassis (1) extends from its bearing on the seat surface up to approximately level with the border (9) or the fastening bearing (10) of the seat shell (3), such that it is also possible for the shoulder belt (7) of a safety belt system belonging to the vehicle to be fitted on the chassis (1).

12. Child's seat according to Claim 11, characterized in that the shoulder belt (7) of the safety belt system belonging to the vehicle can be fitted at the upper, backrest end of the chassis (1), in particular on the transverse strut (14) thereof, and/or is guided in a belt guide (16,18).

13. Child's seat according to one or more of the preceding claims, characterized in that the transition region (15) bears the belt guide (16) for at least the lap belt (6) of the safety belt system belonging to the vehicle.

14. Child's seat according to one or more of the preceding claims, characterized in that, at least on its side wall (17) directed away from the backrest (5) of the vehicle seat (2), the seat shell (3) has belt-guidance means (18) so that the belt can be fitted, in particular, flatly and can take effect over the extent of said side wall.

15. Child's seat according to Claim 14, characterized in that the belt-guidance means (18) are arranged in the vicinity of the border (9) of the seat shell (3).

16. Child's seat according to one or more of the preceding claims, characterized by positioning and dimensioning of the belt-guidance means (18) for receiving the shoulder belt (7) of a belt system belonging to the vehicle.

17. Infant's seat for motor vehicles according to Claim 1, having a position-securing strut (24) which takes effect in the region of the head end (25), directed away from the backrest end (8), of the chassis (1) and is oriented downwards, beyond the seat surface (4) of the vehicle seat (2), in the direction of the vehicle floor (27), characterized in that the position-securing strut (24) is fixed releasably on the vehicle floor (27) by means of its end which is remote from the chassis.

18. Child's seat according to Claim 17, characterized in that the position-securing strut (24) is a bracket (28) which extends essentially over the seat width.

19. Child's seat according to Claim 17 or 18, characterized in that the position-securing strut (24) is attached to the head end (25) of the chassis (1).

20. Child's seat according to one of Claims 17 to 19, characterized in that the position-securing strut (24) is fixed on the chassis (1), in particular on the longitudinal struts (12) thereof, such that it can be adjusted in the longitudinal direction (11) of the seat.

21. Child's seat according to one or more of Claims 17 to 20, characterized in that the position-securing strut (24) is guided in a longitudinally displaceable manner in the tubular struts of the chassis (1) and can be fixed in different displaced positions.

22. Child's seat according to one or more of Claims 17 to 21, characterized in that that end of the position-securing strut (24) which is remote from the chassis extends downwards, approximately at right angles with respect to the bearing side (26) of the chassis (1), in a direction away from the seat shell (3).

23. Child's seat according to one or more of Claims 17 to 22, characterized in that the position-securing strut (24) is a carrying handle (36) which is mounted pivotably on the chassis (1) and whose cross bar, which extends over approximately the width of the seat, forms, in its lowered position in which it has been pivoted away from the backrest, that end of the position-securing strut (24) which extends downwards beyond the bearing side (26) of the chassis (1).

24. Child's seat according to one or more of Claims 17 to 23, characterized by a fixing belt (37) which extends between the free end of the position-securing strut (24) and the backrest end (8) of the chassis (1), can be adjusted in length for bracing purposes between these parts and is intended for guiding around the underside (38) of the vehicle seat (2).

## Revendications

1. Siège de bébé pour véhicules automobiles comprenant :
- un châssis (1) pour la pose et la mise en appui sur le siège (2) du véhicule,
- une coquille (3) de siège pour l'enfant, portée par le châssis (1), en particulier fixée à ce châssis de façon amovible et/ou oscillante et
- des moyens (16, 18) de guidage de sangle, agencés sur le châssis (1) ainsi que sur la coquille (3) de siège, pour une ceinture de sécurité de véhicule,
caractérisé par
une sangle additionnelle (21), indépendante du véhicule, passée autour de la coquille (3) de siège et guidée dans les moyens (18) de guidage de sangle appartenant à cette coquille, et qui est fixée au châssis (1) par ses extrémités (22).

2. Siège d'enfant selon la revendication 1,
caractérisé
- en ce que le châssis (1) est formé de barres longitudinales (12) s'étendant en forme de bac dans la direction longitudinale (11) du siège et de barres transversales (13, 14) qui assemblent les barres longitudinales (12), et
- en ce qu'une face de portée (26) du châssis (1) repose sur la surface d'assise (4) du siège (2) du véhicule dans la position finale de montage du siège, et une extrémité (8) formant dossier du châssis (1), sensiblement perpendiculaire à la face de portée (26) est appuyée contre le dossier (5) du siège (2) du véhicule dans la position finale de montage du siège.

3. Siège d'enfant selon la revendication 2,
caractérisé
en ce que la sangle additionnelle (21) est fixée à l'extrémité (2) formant dossier à ses deux extrémités et est réglable en longueur.

4. Siège d'enfant selon la revendication 2 ou 3,
caractérisé
en ce que la sangle additionnelle (21) est fixée à une barre transversale (13).

5. Siège d'enfant selon la revendication 4,
caractérisé
en ce que les barres longitudinales (12) présentent, entre leurs régions de contact rectilignes portant sur la surface d'assise (4) et sur le dossier (5) du siège (2) du véhicule, une région de transition (15) qui est inclinée d'angles obtus par rapport à ces régions de contact, et sur l'extrémité supérieure de laquelle la barre transversale (13) est formée solidairement.

6. Siège d'enfant selon la revendication 2 ou 5,
caractérisé
en ce que les barres longitudinales (12) sont des barres tubulaires.

7. Siège d'enfant selon une ou plusieurs des revendications précédentes,
caractérisé
en ce que les barres longitudinales (12) sont réunies l'une à l'autre au droit de l'extrémité (8) formant dossier par une barre transversale repliée (14) qui est en une seule pièce avec elles.

8. Siège d'enfant selon une ou plusieurs des revendications précédentes,
caractérisé
en ce qu'un moyen (18) de guidage de sangle est combiné à un moyen de serrage (19).

9. Siège d'enfant selon la revendication 8,
caractérisé
en ce que les moyens (16) de guidage de sangle solidaires du châssis (1) sont agencés sur les barres longitudinales (12), dans la région de transition (15).

10. Siège d'enfant selon une ou plusieurs des revendications précédentes,
caractérisé
en ce que les moyens (16, 18) de guidage de sangle sont conçus et agencés pour recevoir à encastrement ou avec enveloppement un système de ceinture ventrale et/ou à trois points propre au véhicule.

11. Siège d'enfant selon une ou plusieurs des revendications précédentes,
caractérisé
en ce que l'extrémité (8) formant dossier du châssis (1) s'étend de la portée de ce châssis côté surface d'assise à peu près jusqu'à la hauteur du bord (9) ou du tourillon de fixation (10) de la coquille (3) du siège, de sorte qu'on peut aussi appliquer sur le châssis (1) la sangle d'épaule (7) d'un système de ceinture de sécurité propre au véhicule.

12. Siège d'enfant selon la revendication 11,
caractérisé
en ce que la sangle d'épaule (7) du système de ceinture de sécurité propre au véhicule peut être appliquée contre l'extrémité supérieure, côté dossier, du châssis (1), en particulier, contre la barre transversale (14) de ce châssis et/ou est guidée dans un guide de sangle (16, 18).

13. Siège d'enfant selon une ou plusieurs des revendications précédentes,
caractérisé
en ce que la région de transition (15) porte le guide de sangle (16) recevant au moins la sangle ventrale (6) du système de ceinture de sécurité propre au véhicule.

14. Siège d'enfant selon une ou plusieurs des revendications précédentes,
caractérisé
en ce que la coquille (3) du siège présente, au moins au droit de sa paroi latérale (17) qui est éloignée du dossier (5) du siège (2) du véhicule, des moyens (18) de guidage de sangle servant à donner à la sangle un appui, notamment à contact intégral, effectif sur l'étendue de cette paroi.

15. Siège d'enfant selon la revendication 14,
caractérisé
en ce que les moyens (18) de guidage de sangle sont agencés à proximité du bord (9) de la coquille (3) du siège.

16. Siège d'enfant selon une ou plusieurs des revendications précédentes,
caractérisé
en ce que des moyens (18) de guidage de sangle sont positionnés et dimensionnés pour recevoir la sangle d'épaule (7) d'un système de ceinture de sécurité propre au véhicule.

17. Siège de bébé pour véhicules automobiles selon la revendication 1, comprenant
une barre (24) de blocage de la position qui agit dans la région de l'extrémité de tête (25) du châssis (1) qui est éloignée de l'extrémité (8) formant dossier, et qui pointe vers le bas, au-delà de la surface d'assise (4) du siège (2) du véhicule, en direction du plancher (27) du véhicule,
caractérisé
en ce que la barre (24) de blocage de la position est fixée au plancher (27) du véhicule de façon amovible, par son extrémité éloignée du châssis.

18. Siège d'enfant selon la revendication 17,
caractérisé
en ce que la barre (24) de blocage de la position est un étrier (28) qui s'étend sensiblement sur la largeur du siège.

19. Siège d'enfant selon la revendication 17 ou 18,
caractérisé
en ce que la barre (24) de blocage de la position est montée à l'extrémité de tête (25) du châssis (1).

20. Siège d'enfant selon une des revendications 17 à 19,
caractérisé
en ce que la barre (24) de blocage de la position est fixée au châssis (1), en particulier aux barres longitudinales (12) de ce châssis, de façon réglable dans la direction longitudinale (11) du siège.

21. Siège d'enfant selon une ou plusieurs des revendications 17 à 20,
caractérisé
en ce que la barre (24) de blocage de la position est guidée mobile en translation longitudinale dans les barres tubulaires du châssis (1) et peut être immobilisée dans différentes positions de translation.

22. Siège d'enfant selon une ou plusieurs des revendications 17 à 21,
caractérisé
en ce que l'extrémité de la barre (24) de blocage de la position qui est éloignée du châssis est dirigée vers le bas, à peu près perpendiculairement à la face de portée (26) du châssis (1) dans une direction qui s'éloigne de la coquille (3) du siège.

23. Siège d'enfant selon une ou plusieurs des revendications 17 à 22,
caractérisé
en ce que la barre (24) de blocage de la position est une anse de transport (36) montée pivotante sur le châssis (1) et dont la barre transversale, qui s'étend à peu près sur la largeur du siège, forme, dans la position de basculement abaissée, éloignée du dossier, l'extrémité de la barre (24) de blocage de la position qui est dirigée vers le bas au-delà de la face de portée (26) du châssis (1).

24. Siège d'enfant selon une ou plusieurs des revendications 17 à 23,
caractérisé
par une sangle de blocage (37) s'étendant entre l'extrémité libre de la barre (24) de blocage de la position et l'extrémité (8) formant dossier du châssis (1), réglable en longueur pour établir une tension entre ces éléments, et destinée à être passée autour de la face inférieure (38) du siège (2) du véhicule.
